# EUROPEAN PATENT APPLICATION

(11) **EP 2 342 973 A2**
(43) Date of publication of application: **13.07.2011**
(21) Application number: 10195670.4
(22) Date of filing: 17.12.2010
(51) Int. Cl.: A23K 1/00, A23K 1/14, A23K 1/18

(54) **Animal feed, method for the production of an animal feed, and the milk obtained with this animal feed**

(30) Priority: 18.12.2009 NL 2003975
(71) Applicant: Agrifirm Group B.V., 7324 AE Apeldoorn (NL)
(72) Inventor: Weurding, Roelof Eduard, 9411 CD, Beilen (NL)
(74) Representative: Swinkels, Bart Willem

(57) **Abstract**

The invention relates to a dairy cattle feed and a dairy cattle feed composition whereby cows can produce milk with a higher unsaturated fatty acid content in the range of 38-45% and a higher omega-3 fatty acid content in the range of 1-1.7%. The invention also relates to the milk itself that is produced in this way. One of the components of the dairy cattle feed is ground linseed.

## Description

The present invention relates to an animal feed, a method for the production of an animal feed, and the milk obtained with this animal feed.

The consumption of saturated fatty acids has decreased in the past twenty years, but still only 11 % of men and 6% of women heed the advice that saturated fat should not form more than 10% of the total energy content of the diet. Reducing the amount of saturated fat in the diet is therefore an urgent requirement.

Fatty acids are either saturated or unsaturated. The latter can in turn be either mono-unsaturated or poly-unsaturated. Examples of fatty acids include butyric acid (C4:0), lauric acid (C12:0), palmitic acid (C16:0), stearic acid (C18:0), oleic acid (C18:1 cis-9), linoleic acid (C18:2), alpha-linolenic acid (ALA, C18:3 n-3), elaidic acid (C18:1 trans-9), vaccenic acid (C18:1 trans-11), eicosapentaenoic acid (EPA, C20:5 n-3) and docosahexaenoic acid (DHA, C22:6 n-3).

It is generally the saturated fatty acids that predominate in food of animal origin, while food of plant origin contains a higher percentage of unsaturated fatty acids.

Saturated fatty acids are chemically rather inert and mainly act as easy-to-store fuel and as building components of the human body. Unsaturated fatty acids are more reactive, because they contain free valencies. Various substances can be bound on them, altering their effect. As a result, unsaturated fatty acids can perform various functions. Thus, they protect the cardiovascular system, ensure healthy skin, hair and nails, and even aid cerebral activity. It is particularly a sub-group of these acids, namely the omega-3-fatty acids, that feature in dietary recommendations and advertisements for food products.

Omega-3 fatty acids, such as alpha-linolenic acid, eicosapentaenoic acid (EPA) and docosahexaenoic acid (DHA), are essential fatty acids, as are also the omega-6 fatty acids, such as linoleic acid. They are called "essential", because the human body cannot synthesize them. As they are indispensable for mental and physical health, omega-6 and omega-3 fatty acids must be derived from food.

The typical Western diet contains enough omega-6 fatty acids, which occur e.g. in sunflower-seed oil, margarine, cooking oil and frying oil. However, much too small an amount of omega-3 fatty acids is consumed relative to the omega-6 fatty acids. They occur e.g. in fatty fish, rapeseed oil, linseed oil and walnuts. They play an important role in blood formation, wound healing, inflammations and protection from heart disease.

The aim of the present invention is to provide an alternative animal feed for dairy cattle, especially dairy cows, for the production of an alternative milk that preferably has a healthier composition than normal milk. The word "milk" refers here especially to cow's milk.

The present invention has one or more of the following aims.

The aim of the present invention is in particular to reduce the amount of caproleic acid (C10:1) in milk either by using the animal feed described below (with or without an additional animal feed) or by using the animal feed composition described below, which comprises both the animal feed according to the invention and the additional animal feed according to the invention, as well as to provide this animal feed, additional animal feed or animal feed composition.

The aim of the present invention is in particular to reduce the amount of lauric acid (C12:0) in milk either by using the animal feed described below (with or without an additional animal feed) or by using the animal feed composition described below, as well as to provide this animal feed, additional animal feed or animal feed composition.

The aim of the present invention is in particular to reduce the amount of linderic acid (C12:1) in milk either by using the animal feed described below (with or without an additional animal feed) or by using the animal feed composition described below, as well as to provide this animal feed, additional animal feed or animal feed composition. The aim of the present invention is in particular to reduce the amount of myristic acid (C14:0) in milk either by using the animal feed described below (with or without an additional animal feed) or by using the animal feed composition described below, as well as to provide this animal feed, additional animal feed or animal feed composition.

The aim of the present invention is in particular to reduce the amount of myristoleic acid (C14:1 cis-9) in milk either by using the animal feed described below (with or without an additional animal feed) or by using the animal feed composition described below, as well as to provide this animal feed, additional animal feed or animal feed composition.

The aim of the present invention is in particular to reduce the amount of palmitic acid (C16:0) in milk either by using the animal feed described below (with or without an additional animal feed) or by using the animal feed composition described below, as well as to provide this animal feed, additional animal feed or animal feed composition.

The aim of the present invention is in particular to reduce the amount of palmitinic acid (C16:1 cis-9) in milk either by using the animal feed described below (with or without an additional animal feed) or by using the animal feed composition described below, as well as to provide this animal feed, additional animal feed or animal feed composition.

The aim of the present invention is in particular to raise the amount of oleic acid (C18:1 cis-9) in milk either by using the animal feed described below (with or without an additional animal feed) or by using the animal feed composition described below, as well as to provide this animal feed, additional animal feed or animal feed composition.

The aim of the present invention is in particular to raise the amount of C18:1 cis-12 fatty acid in milk either by using the animal feed described below (with or without an additional animal feed) or by using the animal feed composition described below, as well as to provide this animal feed, additional animal feed or animal feed composition.

The aim of the present invention is in particular to raise the amount of α-linolenic acid (C18:3 cis-9,12,15, an omega-3 fatty acid) in milk either by using the animal feed described below (with or without an additional animal feed) or by using the animal feed composition described below, as well as to provide this animal feed, additional animal feed or animal feed composition.

The aim of the present invention is in particular to reduce the total amount of saturated fatty acids in milk either by using the animal feed described below (with or without an additional animal feed) or by using the animal feed composition described below, as well as to provide this animal feed, additional animal feed or animal feed composition.

The aim of the present invention is in particular to raise the total amount of unsaturated fatty acids in milk either by using the animal feed described below (with or without an additional animal feed) or by using the animal feed composition described below, as well as to provide this animal feed, additional animal feed or animal feed composition.

The aim of the present invention is in particular to raise the total amount of conjugated linoleic acid (CLA) isomers in milk either by using the animal feed described below (with or without an additional animal feed) or by using the animal feed composition described below, as well as to provide this animal feed, additional animal feed or animal feed composition.

The aim of the present invention is in particular to raise the total amount of omega-3 fatty acids in milk either by using the animal feed described below (with or without an additional animal feed) or by using the animal feed composition described below, as well as to provide this animal feed, additional animal feed or feed composition. Omega-3 fatty acids include e.g. α-linolenic acid, docosahexaenoic acid (DHA) and eicosapentaenoic acid (EPA). Omega-6 fatty acids are exemplified by linoleic acid, γ-linolenic acid and arachidonic acid.

The aim of the present invention is in particular to raise the total amount of long-chain fatty acids (LCFAs) in milk either by using the animal feed described below (with or without an additional animal feed) or by using the animal feed composition described below, as well as to provide this animal feed, additional animal feed or animal feed composition.

The aim of the present invention is in particular to reduce the value of the ratio between omega-6 fatty acids and omega-3 fatty acids in milk either by using the animal feed described below (with or without an additional animal feed) or by using the animal feed composition described below, as well as to provide this animal feed, additional animal feed or animal feed composition.

It has now been found surprisingly that milk with a special fatty acid composition can be obtained by using the animal feed according to the present invention, optionally together with the additional animal feed according to the invention.

Unless specified to the contrary, the percentages mentioned here refer to amounts calculated on the total fatty acid content. For example, the presence of 1-2% of a given fatty acid X means that fatty acid X represents 1-2 grams in every 100 grams of all the fatty acids present in the milk.

Unless specified to the contrary, the percentages are percentages by weight.

It has now been found surprisingly that the amount of C10:1 fatty acid in milk can be reduced to a maximum of 0.3%, e.g. to a value in the range of 0.15-0.3%, by using the animal feed described below (with or without an additional animal feed) or by using the animal feed composition described below. In particular, this percentage can be reduced to a maximum of 0.25%. To be more specific, the C10:1 fatty acid represents up to 0.25% (i.e. up to 0.25 wt-%) of all the total fatty acids present in the milk according to this embodiment.

It has now been found surprisingly that the amount of C12:0 fatty acid in milk can be reduced to a maximum of 2.8%, e.g. to a value in the range of 1.9-2.8%, by using the animal feed described below (with or without an additional animal feed) or by using the animal feed composition described below. In particular, this percentage can be reduced to a maximum of 2.6%.

It has now been found surprisingly that the amount of C12:1 fatty acid in milk can be reduced to a maximum of 0.08%, e.g. to a value in the range of 0.00-0.08%, by using the animal feed described here (with or without an additional animal feed) or by using the animal feed composition described here. In particular, this percentage can be reduced to a maximum of 0.05%.

It has now been found surprisingly that the amount of C14:0 fatty acid in milk can be reduced to a maximum of 9.5%, e.g. to a value in the range of 8-9.5%, by using the animal feed described below (with or without an additional animal feed) or by using the animal feed composition described below. In particular, this percentage can be reduced to a maximum of 9.0%.

It has now been found surprisingly that the amount of C14:1 cis-9 fatty acid in milk can be reduced to a maximum of 0.85%, e.g. to a value in the range of 0.6-0.85%, by using the animal feed described below (with or without an additional animal feed) or by using the animal feed composition described below. In particular, this percentage can be reduced to a maximum of 0.7%.

It has now been found surprisingly that the amount of C16:0 fatty acid in milk can be reduced to a maximum of 23.5%, e.g. to a value in the range of 18-23.5%, by using the animal feed described below (with or without an additional animal feed) or by using the animal feed composition described below. In particular, this percentage can be reduced to a maximum of 22.0%.

It has now been found surprisingly that the amount of C16:1 cis-9 fatty acid in milk can be reduced to a maximum of 1.15%, e.g. to a value in the range of 0.85-1.15%, by using the animal feed described below (with or without an additional animal feed) or by using the animal feed composition described below. In particular, this percentage can be reduced to a maximum of 1.1 %.

It has now been found surprisingly that the amount of C18:1 cis-9 fatty acid in milk can be raised to a minimum of 20%, e.g. to a value in the range of 20-28%, by using the animal feed described below (with or without an additional animal feed) or by using the animal feed composition described below. In particular, this percentage can be raised to a minimum of 21% and especially to a minimum of 22%.

It has now been found surprisingly that the amount of C18:1 cis-12 fatty acid in milk can be raised to a minimum of 0.35%, e.g. to a value in the range of 0.35-0.75%, by using the animal feed described below (with or without an additional animal feed) or by using the animal feed composition described below. In particular, this percentage can be raised to a minimum of 0.4%.

It has now been found surprisingly that the amount of C18:3 cis-9,12,15 (an omega-3 fatty acid) fatty acid in milk can be raised to a minimum of 0.9%, e.g. to a value in the range of 0.9-1.4%, by using the animal feed described below (with or without an additional animal feed) or by using the animal feed composition described below. In particular, this percentage can be raised to a minimum of 1.0%.

It has now been found surprisingly that the total amount of saturated fatty acids in milk can be reduced to a maximum of 62%, e.g. to a value in the range of 55-62%, by using the animal feed described below (with or without an additional animal feed) or by using the animal feed composition described below. In particular, this percentage can be reduced to a maximum of 61 % and especially to a maximum of 60%.

It has now been found surprisingly that the total amount of unsaturated fatty acids in milk can be raised to a minimum of 38%, e.g. to a value in the range of 38-45%, by using the animal feed described below (with or without an additional animal feed) or by using the animal feed composition described below. In particular, this percentage can be raised to a minimum of 39% and especially to a minimum of 40%.

It has now been found surprisingly that the total amount of conjugated linoleic acid (CLA) isomers in milk can be raised to a minimum of 0.5%, e.g. to a value in the range of 0.5-1.1%, by using the animal feed described below (with or without an additional animal feed) or by using the animal feed composition described below. In particular, this percentage can be raised to a minimum of 0.65% and especially to a minimum of 0.7%.

It has now been found surprisingly that the total amount of omega-3 fatty acids in milk can be raised to a minimum of 0.9%, e.g. to a value in the range of 0.9-1.7%, by using the animal feed described below (with or without an additional animal feed) or by using the animal feed composition described below. In particular, this percentage can be raised to a minimum of 1.0% and especially to a minimum of 1.1%.

It has now been found surprisingly that the total amount of long-chain fatty acids (LCFAs) in milk can be raised to a minimum of 47%, e.g. to a value in the range of 47-55%, by using the animal feed described below (with or without an additional animal feed) or by using the animal feed composition described below. In particular, this percentage can be raised to a minimum of 49% and especially to a minimum of 50%.

It has now been found surprisingly that the ratio between the omega-6 fatty acids and the omega-3 fatty acids in milk can be reduced to a maximum of 2.0, e.g. to a value in the range of 1.2-2.0, by using the animal feed described below (with or without an additional animal feed) or by using the animal feed composition described below. In particular, this percentage can be reduced to a maximum of 1.9, especially to a maximum of 1.8, and more especially to a maximum of 1.6. To be more specific, this means that, in one of the embodiments of the invention, the ratio between the weight of omega-6 fatty acids and the weight of omega-3 fatty acids can be reduced to a maximum of 1.9.

The present invention therefore provides milk that meets one or more of the criteria mentioned above.

In particular, the invention provides milk with a total amount of saturated fatty acids lying in the range of 55-62% and a total amount of unsaturated fatty acids lying in the range of 38-45%. In particular, the milk has a total conjugated linoleic acid (CLA) isomer content lying in the range of 0.5-1.1%. In one of the embodiments, the milk has a total omega-3 fatty acid content lying in the range of 0.9-1.7%. The total amount of long-chain fatty acids (LCFAs) preferably lies in the range of 47-55%. In particular, this percentage can be raised to a minimum of 49%, especially to a minimum of 50%. The ratio between omega-6 and omega-3 fatty acids preferably lies in the range of 1.2-2.0.

The milk obtained preferably contains: 0.15-0.3% of C10:1 fatty acid, 1.9-2.8% of C12:0 fatty acid, 0.00-0.08% of C12:1 fatty acid, 8-9.5% of C14:0 fatty acid, 0.6-0.85% of C14:1 cis-9 fatty acid, 18-23.5% of C16:0 fatty acid and 0.85-1.15% of C16:1 cis-9 fatty acid. More preferably, the milk obtained contains: 20-28% of C18:1 cis-9 fatty acid, 0.35-0.75% of C18:1 cis-12 fatty acid (in particular, this percentage can be raised to a minimum of 0.4%), and 0.9-1.4% of C18:3 cis-9,12,15 fatty acid (an omega-3 fatty acid).

It has now been found surprisingly that, the milk according to the above embodiments can be obtained by giving cows a feed that can be prepared by the following method for making an animal feed:
- linseed is provided
- the linseed is ground to a meal with the following particle-size distribution:
   ο 3-13% of it stays on a screen with a mesh diameter of 2.00 mm
   **ο** 77-95% of it goes through a screen with a mesh diameter of 2.00 mm but not through a screen with a mesh diameter of 0.50 mm, and
   ο 2-10% of it consists of particles smaller than a mesh diameter of 0.50 mm.

In particular, the linseed meal has the following particle-size distribution:
ο 3-13% of it stays on a screen with a mesh diameter of 2.00 mm
o 47-71 % of it stays on a screen with a mesh diameter of 1.40 mm
o 15-20% of it stays on a screen with a mesh diameter of 1.00 mm
ο 4-8% of it stays on a screen with a mesh diameter of 0.71 mm
ο 2-10% of it stays on a screen with a mesh diameter of 0.50 mm, and
ο 2-10% of it consists of particles smaller than a mesh diameter of 0.50 mm.

The above percentages of the screen fractions are calculated on the total weight of the linseed, i.e. they are percentages by weight.

It has now been found surprisingly that unground linseed (but also extruded linseed) gives a less desirable fatty acid composition of milk, whereas ground linseed gives a more desirable fatty acid composition. The amount of intact linseed is preferably at most 7%, and especially at most 5%, being in the range of 1-7%, for example in the range of 3-5%. The average particle size is preferably in the range of 1.4-1.9 mm and especially 1.5-1.8 mm. The Rosin-Remmler uniformity is preferably in the range of 2.3-4.5, being about 3.0-3.4.

A device that can be used for grinding the linseed is described in US Patent 2005 / 263,634, which is referred to here in its entirety. Such a device has at least two grinding discs, which rotate in opposite directions. A parallel cavity is formed between the discs, and the surfaces of the discs creating this parallel cavity during the rotation of the discs have a shaped profile. If required, the grinding operation is repeated a number of times until the desired particle-size distribution is obtained.

The linseed used preferably contains at least 40% of fat, at least 32% of unsaturated fatty acids and at least 20% of linolenic acid (C18:3), i.e. at least 40 wt-% of the linseed is fat, at least 32 wt-% of it is unsaturated fat, etc.

The linseed content of the feed according to the invention is preferably at least 95%, especially at least 98%, more especially at least 99% and preferably 100%. As mentioned before, most of it is in the ground state, obtained especially by the grinding method described below for example.

Besides the animal feed according to the invention, an additional animal feed can also be used. In principle, two or more additional feeds can also be used. The term "additional feed" is used here to denote a specific feed that can in any case be used as an additional feed, besides some other, optional feeds. The additional feed itself is also the subject of the present invention. It is simply called "feed" in Claims 11-14 for the sake of brevity, but in combination with the dairy cattle feed, it is called "additional feed".

The additional animal feed preferably comprises one or more components chosen from a group comprising sunflower-seed oil and soya-bean oil. More preferably, the additional animal feed contains up to 2% of linseed, up to 0.5% of C18:3 fatty acid, at least 5% of total unsaturated fatty acids, and at least 3% of C18:2 fatty acid, calculated on the total amount of additional feed.

In particular, the additional animal feed contains at least sunflower-seed oil and/or soya-bean oil, for example in a total amount lying in the range of 4-8%, preferably in a total amount of at least 5% and especially one lying in the range of 5-7%.

The unsaturated fatty acid (UFA) content of the additional feed is especially at least 5.5%, such as at least 6.5%, and it is preferably in the range of about 5.5-8%, such as 5.5-7.5% and is more especially at least 6%. The linoleic acid (C18:2) content of the additional feed is especially at least 3.3%, such as 3.3-5.3% and preferably at least 3.5%. More preferably, the linseed content of the additional feed is at most 1%, more especially at most 0.5%, and preferably essentially zero.

The saturated fatty acids in the *feeds* described here are C12:0 + C14:0 + C16:0 + C18:0, provided that these components are present in the material in question. The unsaturated fatty acids in the feed described here are C16:1 + C18:1 + C18:2 + C18:3, provided that these components are present in the material in question. Therefore, if it is stated that the additional feed contains for example at least 6.5% of unsaturated fatty acids, it means that there is at least a total of 6.5% of one or more fatty acids chosen from the group comprising C16:1 + C18:1 + C18:2 + C18:3. This means that not all four components need to be present, but the ones that are present jointly must constitute at least 6.5% of the unsaturated fatty acids in the material in question.

In the context of milk, the terms saturated fatty acids, unsaturated fatty acids, saturated fatty acid content and unsaturated fatty acid content mean respectively all the saturated fatty acids, unsaturated fatty acids, total saturated fatty acid content and total unsaturated fatty acid content that may be present, that is to say, they can also include fatty acids other than the two sets of four fatty acids mentioned above.

The dairy cattle feed composition can be obtained in the same way. The present invention therefore also provides for a dairy cattle feed composition that comprises both the dairy cattle feed described above and the additional animal feed described above, where the additional feed contains one or more of the following components, chosen from a group comprising sunflower-seed oil and soya-bean oil.

In particular, the additional feed contains up to 2% of linseed, up to 0.5% of C18:3 fatty acid, at least 5% of total unsaturated fatty acids, and at least 3% of C18:2 fatty acid, calculated on the total amount of additional feed present in the dairy cattle feed composition.

In one of the embodiments, the additional feed preferably contains both soya-bean oil and sunflower-seed oil. The additional feed can contain the soya-bean oil and/or the sunflower-seed oil either as such or in the form of the corresponding beans and seeds, respectively. In one of the embodiments, the additional feed present in the dairy cattle feed composition contains at least 6.5% of unsaturated fatty acids (i.e. C16:1 + C18:1 + C18:2 + C18:3) and at least 3.5% of linoleic acid (C18:2), calculated on the total weight of the additional feed.

The other components of the additional feed can be chosen for example from a group comprising: maize, wheat, maize gluten feed, soya-bean meal extract, rapeseed meal extract, cane molasses, etc. The additional feed can also contain micronutrients, such as salt (NaCl). In one of the preferred embodiments, the additional feed contains no palm oil, and especially no palm products, such as palm oil, palm kernels, palm kernel expeller, etc.

In one of the embodiments of the invention, the additional feed has the following energy content, given in terms of "Dutch feed units for lactation" (VEMs): 1050-1200 VEM/kg, preferably at least 1075 VEM/kg, and especially 1100 VEM/kg. "VEM" is a measure of the calorie content of dairy cattle feed, where 1000 VEMs (i.e. 1 kVEM) are approximately equal to the energy content of 1 kg of barley.

In another embodiment of the invention, the additional feed contains unsaturated fatty acids (UFAs) in an amount of 50-80 g/kg, preferably at least 55 g/kg and especially at least 60 g/kg, where the unsaturated fatty acids represent the sum of C16:1 + C18:1 + C18:2 + C18:3 fatty acids. Furthermore, the amount of C18:2 fatty acid in the additional feed is preferably 33-60 g/kg, such as 33-53 g/kg and especially at least 35 g/kg (see the text above, where it is given as "at least 3.5%").

Furthermore, the amount of the C18:3 fatty acid is preferably in the range of 0.9-8 g/kg, such as 0.9-6 g/kg, e.g. 2.5-5.0 g/kg. In one of the embodiments, the amount of saturated fatty acids is preferably in the range of 8-15 g/kg, such as 9-13 g/kg.

In a specific embodiment of the invention, the ratio between the amount of unsaturated fatty acids (UFA content) and the amount of saturated fatty acids (SFA content), i.e. the value of UFA/SFA is at least 5.5, preferably at least 5.8 and especially 6.2, that is, it is in the range of 5.5-7 and especially 5.8-6.4. The crude fat content can be in the range of 65-105 g/kg, such as 70-100 g/kg. All the values given in terms of "g/kg" are calculated on the weight of the additional feed.

The preferred ranges are given in the following table:

| | **Minimum** | **Maximum** |
|---|---|---|
| | | |
| ***Effective raw materials,** %* | | |
| Soya-bean oil | 0 | 7 |
| Sunflower-seed oil | 0 | 7 |
| Soya-bean oil and sunflower-seed oil | 5 | 7 |
| | | |
| ***Nutrients, g*/*kg*** | | |
| VEM | 1075 | 1150 |
| UFAs* | 55 | 75 |
| C18:2 | 33 | 53 |
| C18:3 | 0.9 | 5.0 |
| SFAs** | 9 | 13 |
| UFA/SFA ratio | 5.8 | 6.4 |
| Crude fat | 70 | 100 |

| | | |
|---|---|---|
| *UFA=C16:1 +C18:1 +C18:2+C18:3 **SFA=C12:0+C14:0+C16:0+C18:0 | | |

The present invention also relates to a method of feeding a product to cows, where the product in question contains at least the dairy cattle feed or the dairy cattle feed composition described above. The feed can therefore consist of one or more components. The dairy cattle feed composition consists of at least the dairy cattle feed and the additional feed. The dairy cattle feed composition can be administered in various ways. Its components can be fed to the animals either simultaneously or consecutively. Therefore, the term "dairy cattle feed composition" does not imply the administration as a single batch of feed in the context of the invention but allows for the consecutive administration of the various components of the dairy cattle feed and the additional feed.

In a particularly advantageous method, the animals are fed in the period from November to March inclusive and preferably throughout the whole of this period. More especially, it is advantageous to feed the animals in the period from October to mid-April (about 15^{th} April) and preferably throughout the whole of this period.

The present invention also provides a method for milk production described above, where the cows are fed the dairy cattle feed described above, or the dairy cattle feed composition described above, preferably according to the feeding regime described above, over the winter months.

### Examples

### I. Measurements carried out on linseed

The following measurements were carried out:
1. Dry screen analysis and the microscopic examination of the particles retained on 2-mm and 1.4-mm mesh screens.
2. Determination of the average particle size, uniformity and free-flow properties, if required.

### Dry screen analysis

A set of screens having the usual construction was used in conjunction with samples weighing 250 g. The set in question comprised screens with the following mesh sizes: 4.00 mm, 2.80 mm, 2.00 mm, 1.40 mm (with small hard spheres), 1.00 mm (with small hard spheres), 0.71 (with small hard spheres), 0.50 mm (with small hard spheres) and a closed bottom. The average particle size and the uniformity were determined by the Rosin-Remmler method.

The preferred criteria were as follows: at most 10% of the particles should be retained on the 2.00-mm mesh screen, and at most 70% of the particles should be retained on the 1.40-mm mesh screen; the average particle size should be at least 1.2 mm (for the sake of the free-flow properties), and the uniformity should preferably be over 2.0 as determined by the Rosin-Remmler method.

### Microscopic examination

A small sample was taken for microscopic examination both from the omega meal retained on the 2.00-mm mesh screen and from that retained on the 1.40-mm mesh screen. The percentage of intact (undamaged) linseeds in the sample was estimated visually. According to the preferred criterion, the intact (undamaged) linseeds should not constitute more than 5% of the sample.

### II. Examples of unprocessed linseed

The method described above was used to determine the particle-size distribution of the linseed. All this material passed through the screens with a mesh size of 4.00 and 2.80 mm. The amounts of the various fractions were as follows:
0.7% measuring 2.00 mm
97.5% measuring 1.40 mm
1.0% measuring 1.00 mm
0.4% measuring 0.71 mm
0.2% measuring 0.50 mm
0.2% forming the bottom fraction.

It should be mentioned here that the material retained on the screen with a mesh size of 0.71 mm and on the screens with smaller mesh sizes consisted entirely of impurities (dust and chaff), without any linseed in it. On the screen with a mesh size of 1.0 mm, there were some linseeds, but most of the material consisted of impurities.

### III. Examples of processed linseed

The results obtained for 7 batches are shown in the following table, which gives the mean values of the various characteristics of these 7 batches of linseed processed according to the present invention:

| | Mean value |
|---|---|
| *Screen mesh diameter, mm* | |
| 2.00 | 6% |
| 1.40 | 58% |
| 1.00 | 18% |
| 0.71 | 6% |
| 0.50 | 5% |
| Bottom of the screen | 6% |
| | |

| *Proportion of intact seeds, %* | |
|---|---|
| On the 2.00-mm screen | 9% |
| On the 1.40-mm screen | 5% |
| In the whole sample | 4% |
| | |
| Average particle size, mm | 1.6 |
| | |
| Uniformity | 3.2 |

### IV. Trials aimed at raising the unsaturated fatty acid content of milk by 30% over that of standard milk

The following data were recorded in each trial:
1. Daily amount fed in the case of each feed, namely grass silage, chopped maize, other roughage fodder, simple dry or wet feeds, and compound feeds
2. Amount of feed left by the animals and removed before presenting the next feed
3. Number of cows with access to the basic ration in the feeding rack
4. Number of cows that were milked and whose milk was effectively collected in the tank
5. Amount of milk removed by the farmer from the tank for his own use, i.e. for household consumption, milk for the calves, etc.

### Sampling the feed components

Representative samples were taken from the grass silage and the chopped maize silage used by the farmer for feeding his cows at the time during the trials. The other roughage fodders and the wet feeds present in the same feed ration were also sampled. All the samples were analysed for the amount of crude fat in them and for their fat composition.

### Sampling the milk in the tank

The milk produced on the farms involved in the trials and collected in tanks was regularly sampled and tested e.g. for the amount of fat, protein and lactose in % terms, as well as for the cell count. The amount of milk was also determined in kg per delivery. These data were recorded in various systems. Each milk delivery generally comprised the milk obtained in three full days. Dividing the total volume of milk in kg by 3 gave the average daily milk production over the period in question. If the delivery did not apply to three days, it was noted.

### Processing the data

The above information was used to calculate the following data for each farm:
1. Nature of the feed used and its daily intake in kg
2. Number of cows receiving these feeds
3. Fatty acid composition of these feeds
4. Average amount of each fatty acid received by the cows in grams (calculated from items 1-3 above)
5. Average amount of milk produced by a cow per day
6. Average fatty acid composition of the milk obtained.

### Results

The ration consisted of a basic ration, with both the roughage fodders (e.g. grass silage, chopped maize and possibly hay or lucerne), and loose dry or wet concentrates. The feed components forming the basic ration were combined in a fixed ratio for each farm, and placed at the disposal of the animals in the feeding rack. All the dairy cows had unlimited access to this basic ration throughout the day. In addition, the cows were given at least one feed concentrate, which was made available to them from an automatic concentrate feeder. The amount given to each cow depended on her milk production. Each cow was identified by the automatic concentrate feeder, and her daily feed ration was administered in a number of portions over the day. The additional feed was always fed on the farms as a supplementary concentrate, which was dispensed from the automatic concentrate feeder. All the data given below are average daily feed uptakes per cow, obtained by dividing the total feed consumed by the number of cows per day.

The following table shows that the amounts of the individual fatty acids and fatty acid groups (FA groups) lie in the required fixed ranges of milk fat on Farms A, B, C and D.

| Fatty acid or FA group | Required range | A | B | C | D |
|---|---|---|---|---|---|
| | | | | | |
| C12:0 fatty acid | 1.9-2.8 | 2.13 | 2.28 | 2.59 | 2.34 |
| C14:0 fatty acid | 8.0-9.5 | 8.25 | 8.42 | 8.85 | 8.68 |
| C16:0 fatty acid | 18.0-23.5 | 20.2 | 20.5 | 21.9 | 20.7 |
| C18:1 cis-9 fatty acid | 21.0-28.0 | 26.0 | 25.6 | 23.4 | 24.3 |
| C18:3 cis-9,12,15 fatty acid | 0.9-1.4 | 1.09 | 0.91 | 1.03 | 1.24 |
| Saturated fatty acids | 55-62 | 58.9 | 59.0 | 61.4 | 60.4 |
| Unsaturated fatty acids | 38-45 | 41.1 | 41.0 | 38.6 | 39.6 |
| C18:2 cis-9, trans-11 (CLA) | 0.65-1.10 | 0.79 | 0.76 | 0.68 | 0.73 |
| Omega-3 fatty acids | 1.0-1.7 | 1.22 | 1.05 | 1.17 | 1.40 |
| Long-chain fatty acids | 47-55 | 51.9 | 52.3 | 49.2 | 50.8 |
| Omega-6 / omega-3 FA ratio | 1.2-1.9 | 1.35 | 1.71 | 1.75 | 1.40 |

All the cows were given about 1.5 kg of ground linseed according to the invention (which is therefore in fact a feed concentrate) and an additional feed (which is in fact also a feed concentrate) in an amount that varied according to their milk production. This additional feed comprised sunflower-seed oil and soya-bean oil and contained 0.5% of C18:3 fatty acid, 6.5% of total unsaturated fatty acids, and 4% of C18:2 fatty acid, calculated on the total amount of additional feed. The amount of ground linseed mentioned above was calculated on a "product base", which means that it included any moisture that may have been present in it.

### Farm A

The animals on Farm A were given the following rations: a basic ration (consisting of grass silage, chopped maize, rapeseed meal extract and soya-bean meal extract), 1.4 kg of a supplementary feed concentrate consisting of ground linseed meal according to the invention (calculated on a product basis), and 3.8 kg of an additional feed (calculated on a product basis). The cows on this farm had an average daily uptake of 959 g of unsaturated fatty acids with their ration, and they produced 456 g of unsaturated fatty acids a day, so the conversion rate was 48%.

The nutrient levels of the ration had the following figures: unsaturated fatty acids (UFAs) = 51 g/kg, C18:2 fatty acid = 17 g/kg and C18:3 fatty acid = 21 g/kg.

The milk contained 41.1% of unsaturated fatty acids and 1.22% of omega-3 fatty acids during the period in which the measurements were carried out.

### Farm B

The animals on Farm B were given the following rations: a basic ration (consisting of grass silage, chopped maize, lucerne, wheat/brewer's grains, corn-cob meal and soya-bean meal extract) plus 1.5 kg of linseed meal ground according to the invention and 3.3 kg of the additional feed according to the invention in the form of a supplementary feed concentrate, both amounts being calculated on a product basis. The cows on this farm had an average daily uptake of 958 g of unsaturated fatty acids with their ration, and they produced 315 g of unsaturated fatty acids a day, so the conversion rate was 33%.

The nutrient levels of the ration had the following figures: unsaturated fatty acids (UFAs) = 56 g/kg, C18:2 fatty acid = 20 g/kg and C18:3 fatty acid = 24 g/kg. The milk contained 41.0% of unsaturated fatty acids and 1.05% of omega-3 fatty acids during the period in which the measurements were carried out.

### Farm C - Examples of other feed rations

The following rations also gave good results: a basic ration (consisting of grass silage, chopped maize, wheat/brewer's grains and soya-bean meal extract) plus 1.5 kg of ground linseed according to the invention, and 2.8 kg of the additional feed in the form of a supplementary feed concentrate, both amounts being calculated on a product basis. The cows on this farm had an average daily uptake of 982 g ofunsaturated fatty acids with their ration, and they produced 449 g of unsaturated fatty acids a day, so the conversion rate was 46%.

The nutrient levels of the ration had the following figures: unsaturated fatty acids (UFAs) = 51 g/kg, C18:2 fatty acid = 18 g/kg and C18:3 fatty acid = 22 g/kg. The milk contained 38.6% of unsaturated fatty acids and 1.17% of omega-3 fatty acids during the period in which the measurements were carried out.

### Farm D - Examples of other feed rations

The following rations also gave good results: a basic ration (consisting of grass silage, chopped maize, hay, brewer's grains, chopped grass and isomultulose syrup [Palatinose molasses]) plus 1.4 kg of linseed meal ground according to the invention, and- as a supplementary feed concentrate - 3.2 kg of additional feed and 1.6 kg of soya-bean meal extract, all three amounts being calculated on a product basis. The cows on this farm had an average daily uptake of 1003 g of unsaturated fatty acids with their ration, and they produced 438 g of unsaturated fatty acids a day, so the conversion rate was 44%.

The nutrient levels of the ration had the following figures: unsaturated fatty acids (UFAs) = 42 g/kg, C18:2 fatty acid = 14 g/kg and C18:3 fatty acid = 19 g/kg. The milk contained 39.6% of unsaturated fatty acids and 1.40% of omega-3 fatty acids during the period in which the measurements were carried out.

### Farm E

The following feed rations were used on Farm E: a basic ration (consisting of grass silage, chopped maize, compressed potato fibres, brewer's grains, Cigarant, Corn Gold and soya-bean meal extract) plus 2.1 kg of ground linseed according to the invention, and 4.0 kg of a conventional supplementary feed concentrate, both calculated on a product basis. The cows on this farm had an average daily uptake of 954 g of unsaturated fatty acids with their ration, and they produced 445 g of unsaturated fatty acids a day, so the conversion rate was 47%.

The nutrient levels of the ration had the following figures: unsaturated fatty acids (UFAs) = 50 g/kg, C18:2 fatty acid = 12 g/kg and C18:3 fatty acid = 26 g/kg. The milk contained 39.3% of unsaturated fatty acids and 1.41% of omega-3 fatty acids during the period in which the measurements were carried out.

### Farm F

The following rations were used on Farm F: a basic ration (consisting of grass silage, chopped maize, compressed potato fibres, linseed meal [not ground according to the present invention] soya-bean meal extract) and a supplementary feed concentrate. The cows on this farm had an average daily uptake of 621 g of unsaturated fatty acids with their ration, and they produced 393 g of unsaturated fatty acids a day, so the conversion rate was 63%.

The nutrient levels of the ration had the following figures: unsaturated fatty acids (UFAs) = 34 g/kg, C18:2 fatty acid = 16 g/kg and C18:3 fatty acid = 10 g/kg. The milk contained 38.0% of unsaturated fatty acids and 0.90% of omega-3 fatty acids during the period in which the measurements were carried out.

### V. Comparative trials

Batches of milk obtained in a different way were tested for their total fatty acid content and omega-3 fatty acid content. The fatty acid composition of the milk was determined first after feeding the cows a conventional ration and then after giving them each a daily quantity of 1.4 kg of unprocessed linseed or 1.4 kg of ground linseed meal, or else 1.4 kg of extruded linseed.

The cows received each type of linseed for four weeks. The following table shows the results obtained for the fatty acid content of the tank milk in the case of unsaturated fatty acids and omega-3 fatty acids. The use of untreated linseed (whole seeds) raised both the amount of unsaturated fatty acids and the amount of omega-3 fatty acids in the milk (by respectively 12% and 23% relative to the linseed-free diet). However, the use of extruded linseed raised the amount of unsaturated fatty acids and the amount of omega-3 fatty acids more (by respectively 18% and 56% relative to the linseed-free diet). It was found surprisingly that the greatest increase in the amount of unsaturated fatty acids and omega-3 fatty acids (by respectively 25% and 74% relative to the linseed-free diet) was obtained in these trials with finely ground linseed, obtained with the aid of a hammer mill fitted with a screen with a mesh size of about 2.75 mm.

| **Fatty acid or fatty acid group** | **Unsaturated fatty acids, %** | **Omega-3 fatty acids, %** |
|---|---|---|
| No linseed | 27.4 | 0.62 |
| Unprocessed linseed | 30.7 | 0.76 |
| Extruded linseed | 32.4 | 0.97 |
| Ground linseed (according to the invention) | 34.2 | 1.08 |

### VI. Grinding method

A "Multicracker" described below and in US Patent 2005 / 263,634 was used as the preferred grinding machine. In an experimental embodiment, it consisted - amongst other parts - of two sets of hardened discs sliding over and rotating against each other with a very accurate fit. The distance between them could be adjusted with an accuracy of 0.1 mm. The distance over which the discs could be adjusted ranged from 0.0 to 20.0 mm. The disc setting used for grinding the linseed ranged from virtually 0.0 to 0.1 mm.

The linseed was generally ground several times, since a single pass mostly proved insufficient. The number of grinding operations needed was determined on the basis of the results of screen analysis, microscopic examination and the determination of the free-flow properties, mentioned above.

The discs were driven by two motors, and the two sets of discs could be operated at two different speeds by using two V-belt pulleys. The speed of the two sets of discs was chosen on the basis of tests. Set 1 was made to rotate at a speed that was more than 50% and less than 100% of the speed of set 2. This raised the grinding efficiency (due to the better cutting action) and so reduced the number of times the product had to be ground in the Multicracker. Furthermore, frequency-regulated motors might ensure the best grinding results in future.

### VII. Additional feed

The additional feed was used as a supplementary (preferably first) feed concentrate, administered besides the animal feed according to the invention. The additional feed had the following specific characteristics:
1. It did not contain any palm products, which have a high saturated fat content
2. It did not contain any linseed or linseed products
3. It contained (at least) 1.3% of sunflower-seed oil
4. It contained about 4.75% of soya-bean oil
5. It contained (at least) 6.5% of unsaturated fatty acids
6. It contained little linolenic acid (C18:3), namely about 0.35%
7. It was rich in linoleic acid (C18:2), containing about 4.2% of it.

### VIII. Example of a specific additional feed

| **Feed components** | **Approximate amount, %** |
|---|---|
| Maize and maize gluten fodder | 49 |
| Wheat | 16 |
| Soya-bean extract and rapeseed meal extract | 20 |
| Soya-bean oil | 5 |
| Cane molasses | 4 |
| Sunflower-seed oil | 1.5 |
| Other | 3 |

This feed contained 65 grams of unsaturated fatty acids per kg, 42 grams of C18:2 fatty acid per kg, and 3.5 grams of C18:3 fatty acid per kg.

### IX. Feeding regime used

The following feeding regime was used in a trial that was performed to find the preferred embodiment in order to achieve the required milk fat composition:
1. The cows received 1.5 kg of ground linseed according to the invention per day. This could be adjusted according to the results obtained on the farm in question. The normal range of the winter ration was 1-2.5 kg of ground linseed meal per cow per day.
2. The additional feed was given as the first supplementary feed concentrate.
   a) The additional feed was preferably administered with the aid of a computerized concentrate feeder, but it can also be fed from overhead in the milking parlour or with the aid of a milking robot.
   b) The dairy cows received an amount of additional feed according to their milk production. This was calculated on the basis of the Dutch net energy for lactation (VEM). High-yielding cows (those at the beginning of lactation) therefore received more additional feed than low-yielding ones (those at the end of lactation).
   c) The daily amount of additional feed administered therefore varied from 0 to 12 kg per cow, but for the average cow on the farm it was in practice about 4 kg, varying in the range from 2.5 to 6 kg.
   d) The composition of the additional feed could be adjusted on the basis of the results obtained for the composition of the milk.

## Claims

1. Dairy cattle feed consisting of ground linseed, wherein the ground linseed has the following particle-size distribution:
a. 3-13% of it stays on a screen with a mesh diameter of 2.00 mm
b. 77-95% of it goes through a screen with a mesh diameter of 2.00 mm but not through a screen with a mesh diameter of 0.50 mm, and
c. 2-10% of it has a particle size smaller than a mesh diameter of 0.50 mm, where the percentages are calculated on the total weight of the linseed.

2. Dairy cattle feed according to Claim 1, wherein the ground linseed has the following particle-size distribution:
a. 3-13% of it stays on a screen with a mesh diameter of 2.00 mm
b. 47-71 % of it stays on a screen with a mesh diameter of 1.40 mm
c. 15-20% of it stays on a screen with a mesh diameter of 1.00 mm
d. 4-8% of it stays on a screen with a mesh diameter of 0.71 mm
e. 2-10% of it stays on a screen with a mesh diameter of 0.50 mm, and
f. 2-10% of it has a particle size smaller than a mesh diameter of 0.50 mm, where the percentages are calculated on the total weight of the linseed.

3. Dairy cattle feed composition comprising the dairy cattle feed according to Claim 1 or 2 together with an additional feed, wherein the additional feed contains one or more components chosen from a group comprising sunflower-seed oil and soya-bean oil.

4. Dairy cattle feed composition, according to Claim 3, wherein the additional feed contains at most 2% linseed, at most 0.5% of C18:3, at least 5% of total unsaturated fatty acids (C16:1 + C18:1 + C18:2 + C18:3) and at least 3% of C18:2, calculated on the total amount of additional feed in the dairy cattle feed composition.

5. Dairy cattle feed composition, according to Claim 3 or 4, wherein the additional feed contains sunflower-seed oil and/or soya-bean oil in a total amount that is in the range of 5-7%, at least 6.5% of unsaturated fatty acids (C16:1 + C18:1 + C18:2 + C18:3), and at least 3.5% of linoleic acid (C18:2).

6. Dairy cattle feed composition, according to any one of Claims 3-5, wherein the additional feed contains no palm products.

7. Dairy cattle feed composition, according to any one of Claims 3-6, wherein the additional feed contains unsaturated fatty acids (UFAs: C16:1, C18:1, C18:2 and C18:3) in an amount that is in the range of 50-80 g/kg, saturated fatty acids (SFAs: C12:0 + C14:0 + C16:0 + C18:0) in an amount that is in the range of 8-15 g/kg, and has a UFA/SFA ratio of at least 5.5 between the unsaturated fatty acids and the saturated fatty acids.

8. Milk with a total saturated fatty acid content in the range of 55-62%, a total unsaturated fatty acid content in the range of 38-45%, a total conjugated linoleic acid (CLA) isomer content in the range of 0.5-1.1%, a total omega-3 fatty acid content in the range of 0.9-1.7%, a total long-chain fatty acid (LCFA) content in the range of 47-55%, and an omega-6 : omega-3 fatty acid ratio in the range of 1.2-2.0, the said percentages being calculated on the total amount of fatty acids in the milk.

9. Milk according to Claim 8, with a C10:1 fatty acid content in the range of 0.15-0.3%, a C12:0 fatty acid content in the range of 1.9-2.8%, a C12:1 fatty acid content in the range of 0.00-0.08%, a C14:0 fatty acid content in the range of 8-9.5%, a C14:1 cis-9 fatty acid content in the range of 0.6-0.85%, a C16:0 fatty acid content in the range of 18-23.5%, and a C16:1 cis-9 fatty acid content in the range of 0.85-1.15%, where the amount of C18:1 cis-9 fatty acid is in particular in the range of 20-28%, and the amount of C18:1 cis-12 fatty acid is in particular in the range of 0.35-0.75%.

10. Additional feed comprising one or more of the following components chosen from a group comprising sunflower-seed oil and soya-bean oil, wherein the feed contains at most 2% of linseed and at most 0.5% of C18:3 fatty acid, a total amount of unsaturated fatty acids (C16:1, C18:1, C18:2 and C18:3) of at least 5% and at least 3% of C18:2 fatty acid, calculated on the total amount of the additional feed.

11. Feed according to Claim 10, comprising sunflower-seed oil and/or soya-bean oil in a total amount in the range of 5-7%, at least 6.5% of unsaturated fatty acids (C16:1 + C18:1 + C18:2 + C18:3) and at least 3.5% of linoleic acid (C18:2).

12. Feed according to Claim 10 or 11, wherein the said feed is free of palm products.

13. Feed according to any one of Claims 10-12, wherein the said feed contains unsaturated fatty acids (UFAs: C16:1 + C18:1 + C18:2 + C18:3) in the range of 50-80 g/kg, saturated fatty acids (SFAs: C12:0 + C14:0 + C16:0 + C18:0) in the range of 8-15 g/kg and has a UFA/SFA ratio of at least 5.5 between the unsaturated fatty acids and the saturated fatty acids.

14. Method for feeding cows a feed, wherein the feed contains at least the dairy cattle feed according to Claim 1 or 2, or the dairy cattle feed composition according to any one of Claims 3-7, in particular wherein the cows are fed in the period from November to March inclusive, more especially in the period from October to mid-April.

15. Method for producing milk according to Claim 8 or 9, wherein cows are fed the dairy cattle feed according to Claim 1 or 2, or the dairy cattle feed composition according to any one of Claims 3-7, especially wherein the cows are fed according to Claim 14 or 15.
